# EUROPEAN PATENT SPECIFICATION

(11) **EP 2 677 723 B1**
(45) Date of publication and mention of the grant of the patent: **24.09.2014**
(21) Application number: 13172310.8
(22) Date of filing: 17.06.2013
(51) Int. Cl.: H04L 29/08, G06F 17/30

(54) **Cookie-based browser identification and tracking**
Cookie-basierte Browseridentifikation und -verfolgung
Identification et suivi de navigateur en fonction de cookies

(30) Priority: 18.06.2012 US 201213526275
(43) Date of publication of application: 25.12.2013
(73) Proprietor: Hughes Network Systems, LLC, Germantown, MD 20876 (US)
(72) Inventor: Nelson, Richard, McLean, VA 22101 (US); Dillon, Douglas, Gaithersburg, MD 20878 (US)
(74) Representative: Körfer, Thomas

(56) References cited:
- EP-A2- 1 398 715
- WO-A1-99/08429

## Description

### BACKGROUND

The present invention generally deals with http cookies, and their use to identify browsers.

A cookie, also known as an HTTP cookie, web cookie, or browser cookie, is used for an origin website to send state information to a user's browser and for the browser to return the state information to the origin site. The state information can be used for authentication, identification of a user session, user's preferences, shopping cart contents, or anything else that can be accomplished through storing text data.

Cookies are arbitrary pieces of data chosen by the web server and sent to the browser. The browser returns them unchanged to the server, introducing a state (memory of previous events) into otherwise stateless HTTP transactions. Without cookies, each retrieval of a Web page or component of a Web page is an isolated event, mostly unrelated to all other views of the pages of the same site. Other than being set by a web server, cookies can also be set by a script in a language such as JavaScript, if supported and enabled by the Web browser.

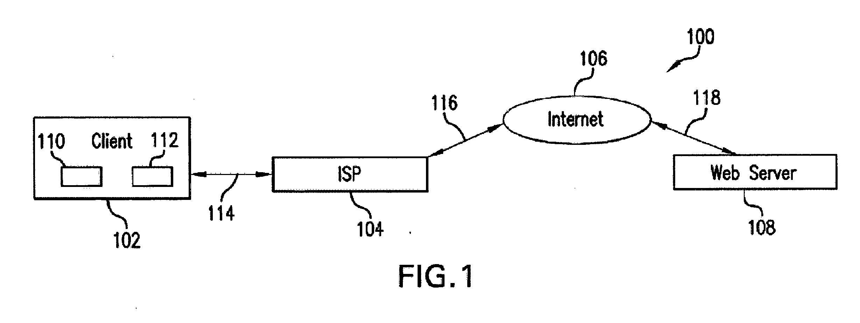

A conventional cookie-based communication system will now be described with reference to **FIG. 1**.

**FIG.** 1 illustrates a conventional communication system **100.**

As shown in the figure, communication system **100** includes a user device **102,** an Internet service provider (ISP) **104,** the Internet **106** and a web server **108.** User device **102** includes a browser **110** and a cookie cache **112.**

In this example, each of browser **110** and cookie cache **112** are represented as distinct devices. However, in some situations browser **110** and cookie cache **112** may be a unitary device. Further, in some situations, at least one of browser **110** and cookie cache **112** may be contained as a utility, program, or subprogram, in any desired tangible computer readable storage medium. In addition, the operations may be embodied by computer programs, which can exist in a variety of forms both active and inactive. For example, they may exist as software program(s) comprised of program instructions in source code, object code, executable code or other formats. Any of the above may be embodied on a tangible computer readable storage medium, which include storage devices. Exemplary tangible computer readable storage media include conventional computer system RAM, ROM, EPROM, EEPROM, and magnetic or optical disks or tapes. Concrete examples of the foregoing include distribution of the programs on a CD ROM or via Internet download. It is therefore to be understood that any electronic device capable of executing the above-described functions may perform those functions enumerated above. When information is transferred or provided over a network or another communications connection (either hardwired, wireless, or a combination of hardwired and wireless) to a computer, the computer properly views the connection as a tangible computer-readable storage medium. Thus, any such connection is properly termed a tangible computer-readable storage medium. Combinations of the above should also be included within the scope of computer-readable storage media.

User device **102** is arranged to bi-directionally communicate with ISP **104** via a communication line **114.** ISP is additionally arranged to bi-directionally communicate with Internet **106** via a communication line **116.** Internet **106** is additionally arranged to bi-directionally communicate with web server **108** via a communication line **118.**

Communication lines **114, 116** and **118** may be any known communication media. Signals within communication lines **114, 116** and **118** typically embody computer-readable instructions, data structures, program modules or other data in a modulated data signal such as a carrier wave or other transport mechanism and include any information-delivery media. Non-limiting examples of communications media of communication lines **114, 116** and **118** include wired media, such as wired networks and direct-wired connections, and wireless media such as acoustic, radio-frequency, infrared, etc.

In operation, take the example situation where user device **102** wants to visit a website, website.com, managed by web server **108.** In such a case, browser **110** will send a request over communication line **114** to ISP **104** to connect with web server **108.** At this point, ISP **104** will connect browser **110** to web server **108** by way of communication line **116,** Internet **106** and communication line **118.**

Web server **108** may want to create a cookie, identifying browser **110.** As such, web server **108** will send cookie information back to user device **102,** by way of communication line **118,** Internet **106,** communication line **116,** ISP **104** and communication line **114.** Upon receiving the cookie information, user device **102** may store the information in cookie cache 112.

Once the cookie information is stored in cookie cache **112,** web server **108** will have access to the cookie information for any subsequent visit by user device **102.** The cookie information may include additional information that will speed up loading time on subsequent visits from browser **110** to web server **108,** for example by preloading data for authentication, identification of a user session, user's preferences, shopping cart contents, or anything else that can be accomplished through storing text data.

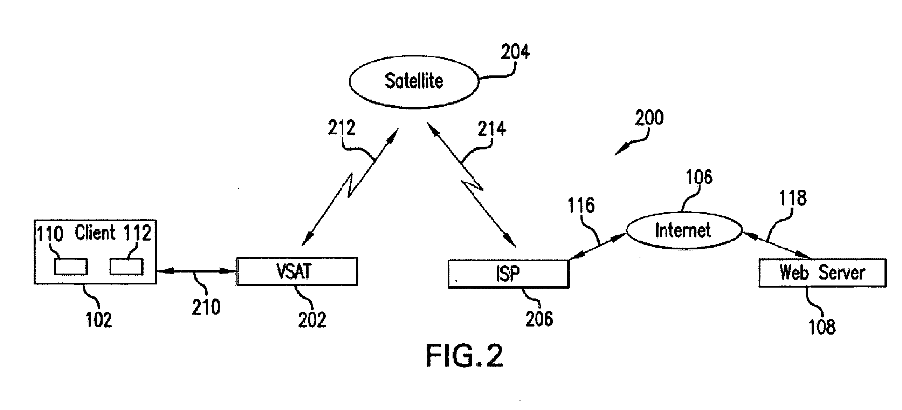

**FIG. 2** illustrates a conventional satellite communication system **200.**

As shown in the figure, communication system **200** includes user device **102,** a very small aperture terminal (VSAT) **202,** a satellite **204,** an ISP **206,** the Internet **106** and web server **108.**

User device **102** is arranged to bi-directionally communicate with VSAT **202** via a communication line **210.** VSAT **202** is additionally arranged to bi-directionally communicate with satellite **204** via a communication line **212.** Satellite **204** is additionally arranged to bi-directionally communicate with ISP **206** via a communication line **214.** ISP **206** is additionally arranged to bi-directionally communicate with internet **106** via communication line **116.**

Communication line **210** may be any known communication media. Non-limiting examples of communications media of communication line **210** include wired media, such as wired networks and direct-wired connections, and wireless media such as acoustic, radio-frequency, infrared, etc. Signals within communication lines **210, 212** and **214** typically embody computer-readable instructions, data structures, program modules or other data in a modulated data signal such as a carrier wave or other transport mechanism and include any information-delivery media.

In operation, take the example situation where user device **102** wants to visit a website, website.com, managed by web server **108.** In such a case, browser **110** will send a request, to connect with web server **108,** over communication line **210** to VSAT **202.** VSAT **202** will transmit the request to satellite **204,** which will then transmit the request down to ISP **206.** At this point, ISP **206** will forward the request to web server **108** by way of communication line **116,** Internet **106** and communication line **118.**

It should be noted that conventional satellite communication system **200** is used merely as a non-limiting example HTTP communication system. Any known communication system may be used wherein VSAT 202 may be replaced with any known intermediate device having the ability to edit browser initiated HTTP traffic may be used. Non-limiting examples of intermediate devices include a router, a firewall, a broadband modem, a wireless access point, and a HTTP proxy-server.

It should be noted that time to transmit the request from user device **102** to ISP **206,** by way of communication line **210,** VSAT **202,** communication line **212,** Satellite **204** and communication line **214,** is dramatically longer than the time to transmit a request from user device **102** to ISP **104** of **FIG. 1****.**

It should be noted that time to transmit the response from web server **108** to user device **102,** by way of communication line **118,** Internet **106,** communication line **116,** ISP **206,** communication line **214,** satellite **204,** communication line **212,** VSAT **202** and communication line **210,** is dramatically longer than the time to transmit a response from web server **108** to user device **102** of **FIG. 1**. Document D1: WO 99/08429 A1 (TACHYON INC. [US]) published on 18.02.1999 discloses web acceleration by prefetching in-line objects, in a satellite environment.

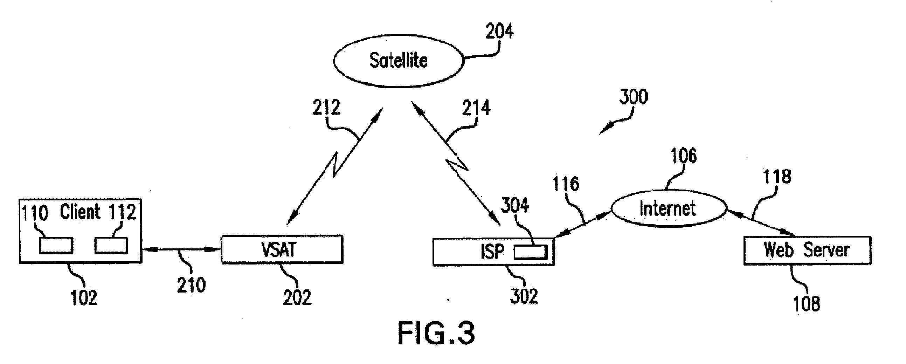

To mitigate the transmission time in a satellite communication system, a clone browser may be used in the ISP. This will be described in detail with reference to **FIG. 3****.**

**FIG. 3** illustrates a conventional satellite communication system with clone browser, which emulates browser **110,** as will be described in greater detail below.

As shown in the figure, communication system **300** is similar to communication system **200** of **FIG. 2****,** where ISP **206** has been replaced with ISP **302.** Further ISP **302** includes a clone browser **304.**

To mitigate wait time in situations with satellite communication system **200,** in communication system **300,** clone browser **304** eliminates multiple passes through satellite **204.** In particular, in the event there are multiple embedded objects in the web page, clone browser **304** performs the requests for the embedded objects with web server **108.** Accordingly, the wait time for clone browser **304** (within ISP **302**) to perform multiple requests with web server **108** in satellite communication system **300** is the same as the wait time for ISP **104** to perform multiple requests with web server **108** in communication system **100** of **FIG. 1**.

While clone browser **304** completes the multiple transactions with web server **108,** clone browser **304** is sending the new responses to VSAT **202** by way of communication line **214,** satellite **204** and communication line **212.**

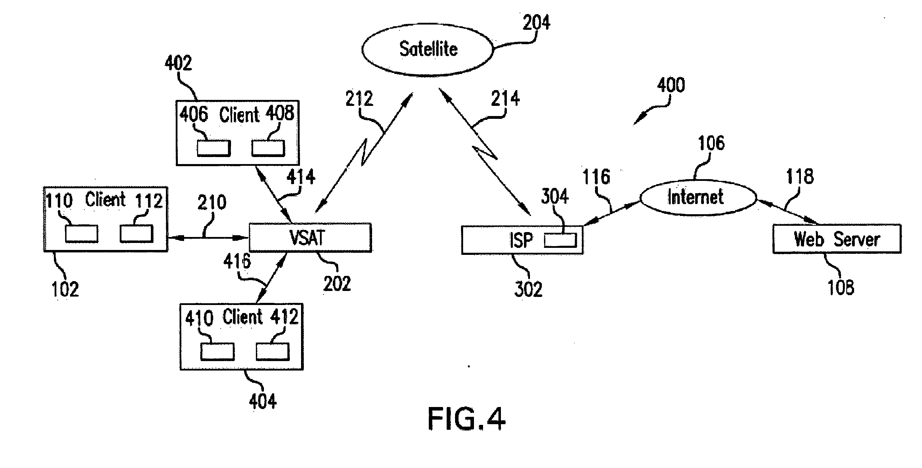

There are instances where many user devices may want to share a VSAT. However, such sharing will eliminate the ability to use a clone browser as discussed above with reference to **FIG.3****.** This will be described with reference to **FIG.4****.**

**FIG.4** illustrates a modified conventional satellite communication system **400.**

As shown in the figure, satellite communication system **400** includes communication system **300,** with the addition of a user device **402** and a user device **404.** User device **402** includes a browser **406** and a cookie cache **408,** whereas user device **404** includes a browser **410** and a cookie cache **412.**

User device **402** is arranged to bi-directionally communicate with VSAT **202** via a communication line **414,** whereas user device **404** is arranged to bi-directionally communicate with VSAT **202** via a communication line **416.**

Communication lines **414** and **416** may be any known communication media. Non-limiting examples of communications media of communication lines **414** and **416** include wired media, such as wired networks and direct-wired connections, and wireless media such as acoustic, radio-frequency, infrared, etc. Signals within communication lines **414** and **416** typically embody computer-readable instructions, data structures, program modules or other data in a modulated data signal such as a carrier wave or other transport mechanism and include any information-delivery media.

A problem with satellite communication system **400** is that clone browser **304** now acts as a clone for the combination of browsers **110, 406** and **410.** Clone browser **304** cannot make requests for browsers **110, 406** and **410** simultaneously. Therefore, clone browser **304** acting as an intermediary between web server **108** and any one of browsers **110, 406** and **410** may have limited web acceleration as only one browser request can be handled by the clone browser at a time If more than one of browsers **110, 406, 410** make requests at the same time, the single clone browser **304** can only handle one for web acceleration.

What is needed is a system and method to differentiate the browsers on the remote VSAT side to be paired up with unique clone browsers on the ISP.

What is additionally needed is an ISP system and method that is able to track individual browsers. This capability is currently only available to web sites.

### BRIEF SUMMARY

The present invention provides a system and method that accelerate web pages between a browser and a web server and enables sharing of a VSAT in a satellite based communication system.

The present invention provides an ISP system and method that is able to track individual browsers and the content they retrieve.

In accordance with an aspect of the present invention, a system is provided for use with a user device and a first server. The user device has a browser therein. The browser can generate a first request to connect with the first server. The system includes a communication portion, a second server, a browser, a redirecting portion and a storage portion. The communication portion can receive the first request. The second server can generate a browser identifier that identifies the browser. The browser identifying portion can determine whether the first request includes the browser identifier. The redirecting portion can connect the browser to the second server when the browser identifying portion determines that the first request includes an unrecognized browser identifier. The storage portion can store the browser identifier. The second server can further create the browser identifier and an instruction having the browser identifier. The instruction can instruct the user device to send a second request, having the browser identifier, to connect to the first server. The communication portion can further send the instruction to the user device and can receive the second request. The browser identifying portion can further determine whether the second request includes the browser identifier. The redirecting portion can further connect the browser to the second server when the browser identifying portion determines that the second request includes the browser identifier. The second server can further generate a third request to connect the browser to the first server, wherein the third request includes the browser identifier.

Additional advantages and novel features of the invention are set forth in part in the description which follows, and in part will become apparent to those skilled in the art upon examination of the following or may be learned by practice of the invention. The advantages of the invention may be realized and attained by means of the instrumentalities and combinations particularly pointed out in the appended claims.

### BRIEF SUMMARY OF THE DRAWINGS

The accompanying drawings, which are incorporated in and form a part of the specification, illustrate an exemplary embodiment of the present invention and, together with the description, serve to explain the principles of the invention. In the drawings:
**FIG. 1** illustrates a conventional communication system;
**FIG. 2** illustrates a conventional satellite communication system;
**FIG. 3** illustrates a modified satellite communication system to enhance web acceleration
**FIG. 4** illustrates a modified conventional satellite communication system;
**FIG. 5** illustrates an example satellite communication system in accordance with aspects of the present invention;
**FIG. 6** illustrates an example VSAT in accordance with aspects of the present invention;
**FIG. 7** illustrates an example method of identifying a browser in accordance with aspects of the present invention; and
**FIG. 8** illustrates a ladder timing diagram of a portion of the method of **FIG. 7**, wherein a browser is attempting to visit web server via a VSAT in accordance with aspects of the present invention.

### DETAILED DESCRIPTION

A satellite communication system in accordance with aspects of the present invention will now be described with reference to **FIGs. 4-6****.**

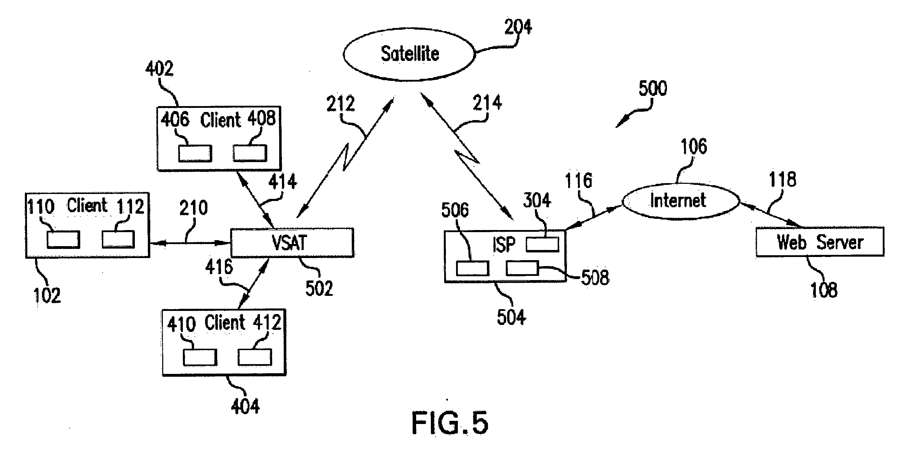

**FIG.5** illustrates an example satellite communication system **500,** in accordance with aspects of the present invention.

As shown in the figure, communication system **500** includes user device **102,** user device **402,** user device **404,** a VSAT **502,** satellite **204,** an ISP **504,** the Internet **106** and web server **108.** ISP **504** includes clone browser **304,** a clone browser **506** and a clone browser **508.**

User device **102** is arranged to bi-directionally communicate with VSAT **502** via communication line **210.** User device **402** is arranged to bi-directionally communicate with VSAT **502** via communication line **414.** User device **404** is arranged to bi-directionally communicate with VSAT **502** via communication line **416.** VSAT **502** is additionally arranged to bi-directionally communicate with satellite **204** via communication line **212.** Satellite **204** is additionally arranged to bi-directionally communicate with ISP **504** via a communication line **214.** ISP **504** is additionally arranged to bi-directionally communicate with internet **106** via communication line **116.**

In contrast with ISP **302** of satellite communication system **400,** ISP **504** of satellite communication system **500** includes a distinct clone browser corresponding to each of browsers **110, 406** and **410.** The clone browser behaves the same as the user device's browser. When an initial request is received from the user device's browser, the request is sent to the clone browser and the clone browser sends the request to the web server. The response is sent back to the clone browser prior to being sent to the user device's browser. The clone browser then makes all the requests for the embedded objects of the web page requested from the initial request and sends the responses to the VSAT. The VSAT holds the responses until requested by the user device's browser. This saves considerable amount of time as the requests for the embedded objects of the web page are not sent over the satellite link, but terminate at the VSAT where the responses are being held.

It should be noted that adding multiple clone browsers to ISP **504** is not a trivial matter. An association must be established between each of browsers **110, 406** and **410** and respective clone browsers **304, 506** and **508.** Aspects of the present invention enable such an association. This will now be described in greater detail.

In operation, for purposes of discussion, presume that a user at user device **102** wants to visit a website managed by web server **108.** In such a case, browser **110** will send a request to web server **108.** In accordance with aspects of the present invention, when VSAT **502** receives the request from browser **110,** the browser identification may be handled in one of three modes.

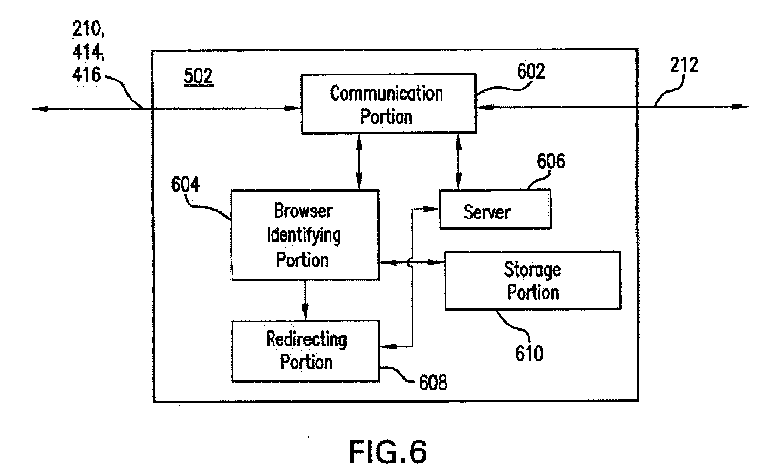

In the first mode, VSAT **502** may pass through the request to web server **108** and no web page acceleration is performed. In this mode, system **400** may ultimately result in an operation similar to system **200** discussed above with reference to **FIG.2****.** There are many reasons that may compel system **500** to perform in this manner, as will be described in greater detail below with reference to **FIG.6****.**

In the second mode, VSAT **502** may perform a series of actions in order to store cookie information related to browser-server pair in the browser's cookie cache. This mode establishes a respective and distinctive session between a single browser and a single clone browser. In this mode, VSAT **502** may redirect the request a number of times to recognize browser **110.** The stored cookie information in the browser's cookie cache attained in the second mode may then be used in the third mode. This will be described in greater detail below with reference to **FIG.6**

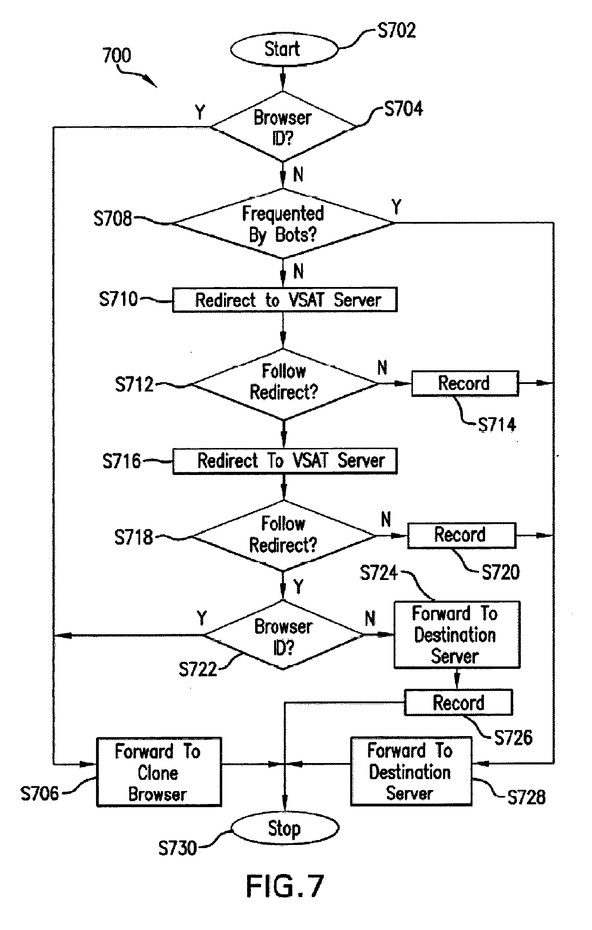

In the third mode, VSAT **502** may quickly identify browser **110** and know the corresponding clone browser in ISP **504,** if VSAT **502** had previously stored the information in the second mode. This mode uses the established distinctive link between a single browser and a single clone browser. In this mode, system **500** results in an accelerated operation, similar to that of system **300** discussed above with reference to **FIG.3****,** but with a plurality of user devices sharing a single VSAT. In essence, browser **110** will not need to send all requests to web server **108** through satellite **204.** On the contrary, VSAT **502** is able to quickly provide the responses to browser **110.** This will be described in greater detail below with reference to **FIG.7****.**

VSAT **502** differs from VSAT **202** to enable functionality of the present invention.

**FIG.6** illustrates an example VSAT in accordance with aspects of the present invention.

As illustrated in the figure, VSAT **502** includes a communication portion **602,** a browser identification portion **604,** a server **606,** a redirecting portion **608** and a storage portion **610.** In this example, each of communication portion **602,** browser identification portion **604,** server **606,** redirecting portion **608** and storage portion **610** are represented as distinct devices. However, in some situations, at least two of communication portion **602,** browser identification portion **604,** server **606,** redirecting portion **608** and storage portion **610** may be a unitary device. Further, in some situations, at least one of communication portion **602,** browser identification portion **604,** server **606,** redirecting portion **608** and storage portion **610** may be contained as a utility, program, or subprogram, in any desired tangible computer readable storage medium.

In this example embodiment, communication portion **602** is arranged to receive/transmit communications with communication lines **210, 414, 416** and **212,** to communicate with browser identifying portion **604** and to bi-directionally communicate with server **606.** Browser identifying portion **604** is additionally arranged to communicate with redirecting portion **608** and to bi-directionally communicate with storage portion **610.** Redirecting portion **608** is additionally arranged to bi-directionally communicate with server **606.**

Communication portion **602** may be any device or system that is operable to transmit and receive information. In particular, communication portion **602** is operable to receive a first request from browser **110** to connect with web server **108.** Communication portion **602** is further operable to send a redirection instruction to user device **102** and to receive a second request from browser **110** based on the redirection instruction.

Typically, in accordance with http protocol, when a get request is received, an http 200 valid response is provided. An http header is followed by the body, which may be an image or any type of information for web server **108.** In accordance with aspects of the present invention, when a get request is received, a response includes an http 302 message, indicating to browser **110** that web server **108** has temporarily moved to the server of VSAT **502**.

Browser identifying portion **604** may be any device or system that is operable to determine whether the first request includes the browser identifier. Browser identifying portion **604** is further operable to determine whether the second request from browser **110** includes the browser identifier.

In a preferred embodiment, VSAT **502** may operate as a transparent HTTP proxy and thus be able to edit the HTTP transactions - requests and responses. Any known system and method may be employed by VSAT **502** for editing the data coming from browser **110,** even though it is being carried by the TCP protocol.

Server **606** may be any system or device that is operable to generate a browser identifier that identifies browser **110.** Server **606** is further operable to create the browser identifier and to create an instruction having the browser identifier. The instruction can instruct user device **102** to send the second request, having the browser identifier, to connect to server **606.** Server **606** is further operable to generate a third request to connect browser **110** to web server **108,** wherein the third request includes the browser identifier.

Redirecting portion **608** may be any system or device that is operable to connect browser **110** to server **606** when browser identifying portion **604** determines that the first request includes an unrecognized browser identifier. Redirecting portion **608** is further operable to connect browser **110** to server **108** when browser identifying portion **604** determines that the second request includes the browser identifier.

Storage portion **610** may be any system or device that is operable to store information, such as User-Agent information to identify robot browsers making requests that cannot be accelerated..

In accordance with aspects of the present invention, in a satellite communication system, wherein a browser wishes to connect a user device to a web server (for example as illustrated in **FIG.5****),** a browser's cookie cache stores a browser identifier-web server pair. After initial visit to web site, all future requests will have the browser identifier as part of the cookie cache and eliminates the need for the VSAT to re-direct to identify the browser. This will be described in greater detail with additional reference to **FIG.7****.**

An example method of operation of system **500** will now be described with reference to **FIG.7****.**

**FIG.7** illustrates an example method **700** of identifying a browser in accordance with aspects of the present invention.

Method **700** starts when a browser requests to connect with a web server **(S702).** For purposes of discussion, take the example wherein, as illustrated in **FIG.5****,** user device **102** desires to connect to web server **108.**

Browser **110** sends an initial request to VSAT **502,** via communication line **210,** to connect to web server **108.**

VSAT **502** must be able to recognize the browser making the request in order to match the browser with the corresponding clone browser in ISP **504.**

Therefore, it is then determined whether the request includes a browser identifier **(S704).** This action takes place in VSAT **502.** For example, as illustrated in **FIG.6****,** communication portion **602** receives the initial request from browser **110** via communication line **210.** Communication portion **602** passes the initial request to browser identifying portion **604.** At this point, browser identifying portion **604** determines whether the initial request includes a browser identifier cookie.

If browser **110** has previously requested a visit to web server **108,** via VSAT **502,** then the request may have a browser identifier. If the request has a browser identifier, then the browser making the request must have visited the web server before through VSAT **502.** Accordingly, browser identifying portion allows VSAT **502** to pair the browser **110** to the corresponding clone browser **304.** The initial request is then forwarded to paired clone browser **304** which will forward request to web server **108** (**S706**).

In this situation, returning to **FIG.5****,** the requesting browser may quickly receive the response related to the web page directly from VSAT **502** if the request is for an embedded object of the web page, as opposed to waiting for the request to travel through satellite **204** to web server **108** and then back from web server **108** and through satellite **204.**

Returning to **FIG.7****,** the request may have an unrecognizable browser identifier (No in **S704).** VSAT **502** may search the HTTP header field to locate the browser identifier in the cookie field. For example, if browser **110** has not previously requested a visit to web server **108,** via VSAT **502,** then the request will not have a browser identifier - thus will be unrecognizable. Again, in this example, the request is an initial request for browser **110** to connect to web server **108** for the first time. In such situation, there will be no browser identifier. If the request does not have a browser identifier (or has an unrecognizable browser identifier), it is then determined whether the destination server is one frequented by HTTP robots that masquerade as a support browser or the browser type cannot support web acceleration because cookie cache is disabled or re-direction is not supported **(S708).** A list of such destination servers and browser types may be stored in storage portion **610.**

In this situation, returning to **FIG.5****,** VSAT **502** may pass the initial request directly to web server **108,** by passing any clone browser **(S728).** In this mode, system **500** may ultimately result in an operation similar to system **200** discussed above with reference to **FIG. 2****,** with the exception that multiple user devices share a single VSAT. In essence, browser **110,** (in this case a HTTP robot masquerading as a support browser, as will be discussed in greater detail later) will need to wait for the response to be retrieved from web server **108.**

Returning to **FIG.7****,** if the request is not from HTTP robots that masquerade as a support browser (N in **S708**), then the initial request is forwarded to the VSAT server **(S710).** For example, returning to **FIG.6****,** redirecting portion **608** redirects the initial request back to browser **110** with the new location being server **606.**

At this point, the initial request did not have a recognizable browser identifier (N in **S704)** and it has been determined that the destination server is not one that is frequented by bots (N in **S708).** Accordingly, VSAT **502** needs to recognize the requesting browser, in this case, browser **110.** Server **606** will assign a browser identifier to the requesting browser. This is why redirecting portion **608** redirects the initial request back to browser **110** with a new browser identifier as the set-cookie field. This is the beginning of the second mode of operation of VSAT **502.**

It is then determined whether the next request from browser **110** follows after receiving the redirection **(S712).** For example, server **606** should receive the next request sent from browser **110** after receiving the re-direct response telling the browser **110** to send the request to server **606.**

If browser **110** does not follow the redirection, then browser **110** is masquerading as a supported browser and does not honor redirects. In such a case, the destination domain and browser type is recorded in the storage portion **610** and no further redirects are attempted for a predetermined period **(S714).**

If the initial request does not follow the redirect, the browser type and destination domain is recorded **(S714).** For example, browser identifying portion **604** lists browser **110** as a supported browser that does not honor redirects in storage portion **610.** In future instances where browser **110** requests to connect to web server **108,** (at **S708)** VSAT **502** will recognize browser **110** as a bot.

The request would then forwarded to the destination server **(S728),** bypassing the web acceleration.

In this situation, returning to **FIG.5****,** VSAT **502** may pass the initial request through to web server **108.** In this mode, system **500** may ultimately result in an operation similar to system **200** discussed above with reference to **FIG.2****.**

If browser **110** follows the redirection (Yes at **S712),** it is then determined whether the redirected request includes a browser identifier. For example, when redirected to server **606** (at **S710),** server **606** should have added a browser identifier to the request. If the browser identifier is still not there, then the likely cause is one of: 1) browser **110** has recently cleared its cookies; 2) browser **110** has disabled its cookies; 3) the requestor is not a browser, but rather another agent masquerading as a supported browser; or 4) browser **110** is connecting to VSAT **502** for the first time.

If the redirected request does not include a browser identifier at this point, then the redirected request is redirected back to the destination server **(S728).** In an example embodiment, the redirected request is redirected back to the destination server with the same assigned browser identifier as discussed with reference to **S710** as the set-cookie field. At this point, redirecting portion again redirects the redirected request from (the previously redirected address to) server **606** to (the originally requested address to) web server **108.**

Returning to **FIG. 7****,** if browser **110** follows the redirection (Yes at **S712),** the redirected request is again redirected to the original web server **(S716).** For example, returning to **FIG.6****,** redirecting portion **608** redirects the request to (the originally requested address to) web server **108.**

It is then determined whether the redirected request follows the second redirection **(S718).** For example, communication portion **602** should receive the twice-redirected request forwarded from redirecting portion **608** and pass to browser identifying portion **604.**

If the redirected request does not follow the second redirection, then for some reason, browser **110** followed the first redirection **(S712)** but not the next **(S718).** In such an unusual case, the destination domain and browser type is recorded and no further redirects are attempted for a predetermined period **(S720),** a non-limiting example of a predetermined period includes 24 hours.

For example, browser identifying portion **604** lists browser **110** in storage portion **610** as an unusual situation browser that honored a first redirect but not a second redirect. In future instances within the predetermined period where browser **110** requests to connect to web server **108,** (at **S708)** VSAT **502** will recognize browser **110** as a bot.

The request would then be forwarded to the destination server **(S728),** bypassing web acceleration.

In this situation, returning to **FIG.5****,** VSAT **502** may ultimately pass the initial request through to web server **108.** In this mode, system **500** may ultimately result in an operation similar to system **200** discussed above with reference to **FIG.2****.** In essence, browser **110,** (in this case a HTTP robot masquerading as a support browser) sends a request to web server **108** and ISP **504** passes the request directly to web server **108,** bypassing web acceleration. As compared with the other situation where browser has the non-redirecting request **(S714),** in this situation, the automatic pass through will only last for the predetermined period, e.g., 24 hours. After the predetermined period expires, the browser is removed from storage portion, and again may have an opportunity for web page acceleration in accordance with the third mode of operation.

Returning to **FIG.7****,** if browser **110** follows the second redirection (Yes at **S718),** it is then determined whether the twice-redirected request includes a browser identifier **(S722).** For example, when redirected to server **606** (at **S710),** server **606** should have added a browser identifier to the request.

If the request does not include a browser identifier, then the twice-redirected request is forwarded to the destination server **(S724).** If the twice-redirected request does not include the browser identifier, then browser **110** has cookies disabled. If browser **110** has cookies disabled, then there is little reason to attempt to obtain/provide browser ID from cookie information from/to browser **110.** As such, the twice-redirected request is then forwarded to web server **108.**

At this point, the browser type and destination domain is recorded **(S726).** For example, browser identifying portion **604** lists browser **110** in storage portion **610** as a browser that has disabled cookies. In future instances where browser **110** requests to connect to web server **108,** (at **S708)** VSAT **502** will recognize browser **110** as a browser that has disabled cookies.

In this situation, returning to **FIG.5****,** VSAT **502** may ultimately pass the initial request through to web server **108.** In this mode, system **500** may ultimately result in an operation similar to system **200** discussed above with reference to **FIG.2****.**

Returning to **FIG.7****,** if the twice-redirected request includes a browser identifier (**S718**), then the twice-redirected request is then forwarded to paired clone browser **304** which will forward request to web server **108** (**S706**).

Aspects of the present invention may be used in systems that do not use a clone browser. For example, returning to **FIG. 1****,** in accordance with aspects of the present invention, ISP **104** may be modified in a manner similar to VSAT **502,** wherein the redirecting method of **FIG. 7** is performed. In such a case, wherein there is no clone browser, the request will be forwarded directly to web server **108.**

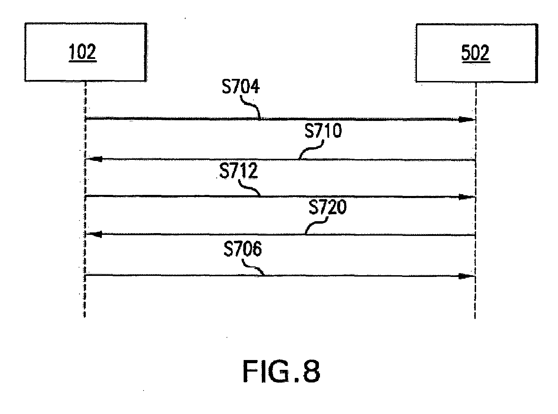

Method **700** then stops **(S730).** A more visual explanation of an example operation of a portion of method **700** will now be described with reference to **FIG. 8****.**

**FIG. 8** illustrates a ladder timing diagram of a portion of method **700,** wherein browser **100** is attempting to visit web server **108** via VSAT **502.**

As illustrated in the figure, in this example, a request is sent from browser **102** to VSAT **502.** VSAT **502** determines that the request does not have a browser ID (**S704**). Then, VSAT **502** redirects the request to the VSAT server (**S710**). In this example, browser **102** follows the redirect and is assigned a browser ID (**S712**). At this point VSAT **502** recognizes the browser ID and instructs browser **102** to redirect the request to the destination server **(S716).** Finally, the request from browser **102** is redirected to the clone browser **304** by way of VSAT **502** (**S706**).

In this situation, returning to **FIG.5****,** VSAT **502** operates in the third mode. In this mode, system **500** result in an accelerated operation as compared to system **200** discussed above with reference to **FIG.3****.** In essence, browser **110** will not need to wait for responses from web server **108** through satellite **204** after sending requests to VSAT **502.** On the contrary, VSAT **502** is able to quickly provide the responses to browser **110** since the responses had already been pre-fetched by clone browser **304.**

The present invention provides a system and method for accelerating web pages. It should be noted that the non-limiting example embodiments discussed above having a satellite communication system are for illustrative purposes only. Any communication system that shares multiple user devices with a single ISP may benefit from aspects of the present invention.

The foregoing description of various preferred embodiments of the invention have been presented for purposes of illustration and description. It is not intended to be exhaustive or to limit the invention to the precise forms disclosed, and obviously many modifications and variations are possible in light of the above teaching. The example embodiments, as described above, were chosen and described in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. A system for use with a user device and a first server, the user device having a browser therein, the browser being operable to generate a first request to connect with the first server, said system comprising:
a communication portion operable to receive the first request;
a second server operable to generate a browser identifier that identifies the browser;
a browser identifying portion operable to determine whether the first request includes the browser identifier;
a redirecting portion operable to connect the browser to said second server when said browser identifying portion determines that the first request includes an unrecognized browser identifier; and
a storage portion operable to store the browser identifier,
wherein said second server is further operable to create the browser identifier and an instruction having the browser identifier, the instruction being operable to instruct the user device to send a second request, having the browser identifier, to connect to the first server,
wherein said communication portion is further operable to send the instruction to the user device and to receive the second request,
wherein said browser identifying portion is further operable to determine whether the second request includes the browser identifier,
wherein said redirecting portion is further operable to connect the browser to said second server when said browser identifying portion determines that the second request includes the browser identifier, and
wherein said second server is further operable to generate a third request to connect the browser to the first server, the third request including the browser identifier.

2. The system of claim 1, wherein said communication portion, said second server, said browser identifying portion, said redirecting portion and said storage portion form a portion of a very small aperture terminal.

3. The system of claim 2, wherein said communication portion is further operable to bi-directionally communicate with the first server.

4. The system of claim 3, wherein said communication portion follows http protocol.

5. The system of claim 1, wherein said communication portion is further operable to bi-directionally communicate with the first server.

6. The system of claim 5, wherein said communication portion follows http protocol.

7. The system of claim 1, wherein said communication portion follows http protocol.

8. A method of using a user device and a first server, the user device having a browser therein, the browser being operable to generate a first request to connect with the first server, said method comprising:
receiving, via a communication portion, the first request;
generating, via a second server, a browser identifier that identifies the browser;
determining, via a browser identifying portion, whether the first request includes the browser identifier;
connecting, via a redirecting portion, the browser to the second server when the browser identifying portion determines that the first request includes an unrecognized browser identifier;
storing, via a storage portion, store the browser identifier;
creating, via the second server, the browser identifier and an instruction having the browser identifier, the instruction being operable to instruct the user device to send a second request, having the browser identifier, to connect to the first server;
sending, via the communication portion, the instruction to the user device;
receiving, via the communication portion, the second request;
determining, via the browser identifying portion, whether the second request includes the browser identifier;
connecting, via the redirecting portion, the browser to the second server when the browser identifying portion determines that the second request includes the browser identifier; and
generating, via the second server, a third request to connect the browser to the first server, the third request including the browser identifier.

9. The method of claim 8, further comprising bi-directionally communicating, via the communication portion, with the first server.

10. The method of claim 9, wherein said receiving, via a communication portion, the first request comprises receiving the first request in accordance with http protocol.

11. The method of claim 8, wherein said receiving, via a communication portion, the first request comprises receiving the first request in accordance with http protocol.

12. A tangible computer-readable media having computer-readable instructions stored thereon, the computer-readable instructions being capable of being read by a computer to be used with a user device and a first server, the user device having a browser therein, the browser being operable to generate a first request to connect with the first server, the tangible computer-readable instructions being capable of instructing the computer to perform the method comprising:
receiving, via a communication portion, the first request;
generating, via a second server, a browser identifier that identifies the browser;
determining, via a browser identifying portion, whether the first request includes the browser identifier;
connecting, via a redirecting portion, the browser to the second server when the browser identifying portion determines that the first request includes an unrecognized browser identifier;
storing, via a storage portion, the browser identifier;
creating, via the second server, the browser identifier and an instruction having the browser identifier, the instruction being operable to instruct the user device to send a second request, having the browser identifier, to connect to the first server;
sending, via the communication portion, the instruction to the user device;
receiving, via the communication portion, the second request;
determining, via the browser identifying portion, whether the second request includes the browser identifier;
connecting, via the redirecting portion, the browser to the second server when the browser identifying portion determines that the second request includes the browser identifier; and
generating, via the second server, a third request to connect the browser to the first server, the third request including the browser identifier.

13. The tangible computer-readable media of claim 12, the computer-readable instructions being capable of instructing the computer to perform said method further comprising bi-directionally communicating, via the communication portion, with the first server.

14. The tangible computer-readable media of claim 13, the computer-readable instructions being capable of instructing the computer to perform said method wherein said receiving, via a communication portion, the first request comprises receiving the first request in accordance with http protocol.

15. The tangible computer-readable media of claim 12, the computer-readable instructions being capable of instructing the computer to perform said method wherein said receiving, via a communication portion, the first request comprises receiving the first request in accordance with http protocol.

## Patentansprüche

1. System zur Verwendung mit einer Nutzervorrichtung und einem ersten Server, wobei in der Nutzervorrichtung ein Browser enthalten ist, der betreibbar ist, um eine erste Anforderung zur Verbindung mit dem ersten Server zu erzeugen,
wobei das System umfasst:
einen Kommunikationsteil, der betreibbar ist, um die erste Anforderung zu empfangen;
einen zweiten Server, der betreibbar ist, um ein den Browser identifizierendes Browser-Identifizierungszeichen zu erzeugen;
einen Browser-Identifizierungsteil, der betreibbar ist, um zu bestimmen, ob die erste Anforderung das Browser-Identifizierungszeichen enthält;
einen Umleitungsteil, der betreibbar ist, um den Browser mit dem zweiten Server zu verbinden, wenn der Browser-Identifizierungsteil bestimmt, dass die erste Anforderung ein unerkanntes Browser-Identifizierungszeichen enthält;
und einen Speicherteil, der betreibbar ist, um das Browser-Identifizierungszeichen zu speichern,
wobei der zweite Server ferner betreibbar ist, um das Browser-Identifizierungszeichen und einen Befehl zu erzeugen, der das Browser-Identifizierungszeichen aufweist,
wobei der Befehl durchführbar ist, um die Nutzervorrichtung anzuweisen, eine das Browser-Identifizierungszeichen aufweisende zweite Anforderung zu senden, um eine Verbindung mit dem ersten Server herzustellen,
wobei der Kommunikationsteil ferner betreibbar ist, um den Befehl an die Nutzervorrichtung zu senden und um die zweite Anforderung zu empfangen,
wobei der Browser-Identifizierungsteil ferner betreibbar ist, um zu bestimmen, ob die zweite Anforderung das Browser-Identifizierungszeichen enthält,
wobei der Umleitungsteil ferner betreibbar ist, um den Browser mit dem zweiten Server zu verbinden, wenn der Browser-Identifizierungsteil bestimmt, dass die zweite Anforderung das Browser-Identifizierungszeichen enthält,
und wobei der zweite Server ferner betreibbar ist, um eine dritte Anforderung zur Verbindung des Browsers mit dem ersten Server zu erzeugen, wobei die dritte Anforderung das Browser-Identifizierungszeichen enthält.

2. System nach Anspruch 1, wobei der Kommunikationsteil, der zweite Server, der Browser-Identifizierungsteil, der Umleitungsteil und der Speicherteil einen Teil einer Mikrofunkstelle bilden.

3. System nach Anspruch 2, wobei der Kommunikationsteil ferner für eine bidirektionale Kommunikation mit dem ersten Server betreibbar ist.

4. System nach Anspruch 3, wobei der Kommunikationsteil einem http-Protokoll folgt.

5. System nach Anspruch 1, wobei der Kommunikationsteil ferner für eine bidirektionale Kommunikation mit dem ersten Server betreibbar ist.

6. System nach Anspruch 5, wobei der Kommunikationsteil einem http-Protokoll folgt.

7. System nach Anspruch 1, wobei der Kommunikationsteil einem http-Protokoll folgt.

8. Verfahren zur Verwendung einer Nutzervorrichtung und eines ersten Servers, wobei in der Nutzervorrichtung ein Browser enthalten ist, der betreibbar ist, um eine erste Anforderung zur Verbindung mit dem ersten Server zu erzeugen,
wobei das Verfahren umfasst:
Empfangen der ersten Anforderung mittels eines Kommunikationsteiles;
Erzeugen eines den Browser identifizierenden Browser-Identifizierungszeichens mittels eines zweiten Servers;
Bestimmen mittels eines Browser-Identifizierungsteiles, ob die erste Anforderung das Browser-Identifizierungszeichen enthält;
Verbinden des Browsers mit dem zweiten Server mittels eines Umleitungsteiles, wenn der Browser-Identifizierungsteil bestimmt, dass die erste Anforderung ein unerkanntes Browser-Identifizierungszeichen enthält;
Speichern des Browser-Identifizierungszeichens mittels eines Speicherteiles;
Erzeugen des Browser-Identifizierungszeichens und eines das Browser-Identifizierungszeichen aufweisenden Befehls mittels des zweiten Servers, wobei der Befehl durchführbar ist, um die Nutzervorrichtung anzuweisen, eine das Browser-Identifizierungszeichen aufweisende zweite Anforderung zur Verbindung mit dem ersten Server zu senden;
Senden des Befehls an die Nutzervorrichtung mittels des Kommunikationsteiles;
Empfangen der zweiten Anforderung mittels des Kommunikationsteiles;
Bestimmen mittels des Browser-Identifizierungsteiles, ob die zweite Anforderung das Browser-Identifizierungszeichen enthält;
Verbinden des Browsers mit dem zweiten Server mittels des Umleitungsteiles, wenn der Browser-Identifizierungsteil bestimmt, dass die zweite Anforderung das Browser-Identifizierungszeichen enthält;
und Erzeugen einer dritten Anforderung mittels des zweiten Servers zur Verbindung des Browsers mit dem ersten Server, wobei die dritte Anforderung das Browser-Identifizierungszeichen enthält.

9. Verfahren nach Anspruch 8, ferner umfassend eine bidirektionale Kommunikation mit dem ersten Server mittels des Kommunikationsteiles.

10. Verfahren nach Anspruch 9, wobei das Empfangen der ersten Anforderung mittels des Kommunikationsteiles ein Empfangen der ersten Anforderung entsprechend einem http-Protokoll umfasst.

11. Verfahren nach Anspruch 8, wobei das Empfangen der ersten Anforderung mittels des Kommunikationsteiles ein Empfangen der ersten Anforderung entsprechend einem http-Protokoll umfasst.

12. Mittels eines Computers lesbares körperliches Medium, in bzw. auf welchem mittels eines Computers lesbare Befehle gespeichert sind, wobei die mittels eines Computers lesbaren Befehle geeignet sind, durch einen.Computer gelesen zu werden, um mittels einer Nutzervorrichtung und eines ersten Servers verwendet zu werden,
wobei in der Nutzervorrichtung ein Browser enthalten ist, der betreibbar ist, um eine erste Anforderung zur Verbindung mit dem ersten Server zu erzeugen,
wobei die mittels eines Computers lesbaren Befehle des körperlichen Mediums geeignet sind, den Computer anzuweisen, das Verfahren auszuführen, umfassend:
Empfangen der ersten Anforderung mittels eines Kommunikationsteiles;
Erzeugen eines den Browser identifizierenden Browser-Identifizierungszeichens mittels eines zweiten Servers;
Bestimmen mittels eines Browser-Identifizierungsteiles, ob die erste Anforderung das Browser-Identifizierungszeichen enthält;
Verbinden des Browsers mit dem zweiten Server mittels eines Umleitungsteiles, wenn der Browser-Identifizierungsteil bestimmt, dass die erste Anforderung ein unerkanntes Browser-Identifizierungszeichen enthält;
Speichern des Browser-Identifizierungszeichens mittels eines Speicherteiles;
Erzeugen des Browser-Identifizierungszeichens und eines das Browser-Identifizierungszeichen aufweisenden Befehls mittels des zweiten Servers, wobei der Befehl durchführbar ist, um die Nutzervorrichtung anzuweisen, eine das Browser-Identifizierungszeichen aufweisende zweite Anforderung zur Verbindung mit dem ersten Server zu senden;
Senden des Befehls an die Nutzervorrichtung mittels des Kommunikationsteiles;
Empfangen der zweiten Anforderung mittels des Kommunikationsteiles;
Bestimmen mittels des Browser-Identifizierungsteiles, ob die zweite Anforderung das Browser-Identifizierungszeichen enthält;
Verbinden des Browsers mit dem zweiten Server mittels des Umleitungsteiles, wenn der Browser-Identifizierungsteil bestimmt, dass die zweite Anforderung das Browser-Identifizierungszeichen enthält;
und Erzeugen einer dritten Anforderung mittels des zweiten Servers zur Verbindung des Browsers mit dem ersten Server, wobei die dritte Anforderung das Browser-Identifizierungszeichen enthält.

13. Mittels eines Computers lesbares körperliches Medium nach Anspruch 12, wobei die mittels eines Computers lesbaren Befehle, welche geeignet sind, den Computer anzuweisen, das Verfahren auszuführen, ferner eine bidirektionale Kommunikation mit dem ersten Server mittels des Kommunikationsteiles umfassen.

14. Mittels eines Computers lesbares körperliches Medium nach Anspruch 13, wobei die mittels eines Computers lesbaren Befehle geeignet sind, den Computer anzuweisen, das Verfahren auszuführen, wobei das Empfangen der ersten Anforderung mittels eines Kommunikationsteiles ein Empfangen der ersten Anforderung entsprechend einem http-Protokoll umfasst.

15. Mittels eines Computers lesbares körperliches Medium nach Anspruch 12, wobei die mittels eines Computers lesbaren Befehle geeignet sind, den Computer anzuweisen, das Verfahren auszuführen, wobei das Empfangen der ersten Anforderung mittels eines Kommunikationsteiles ein Empfangen der ersten Anforderung entsprechend einem http-Protokoll umfasst.

## Revendications

1. Système pour une utilisation avec un dispositif d'utilisateur et un premier serveur, le dispositif d'utilisateur comportant un navigateur dans celui-ci, le navigateur pouvant être utilisé pour générer une première demande pour une connexion au premier serveur, ledit système comprenant :
une partie de communication pouvant être utilisée pour recevoir la première demande ;
un deuxième serveur pouvant être utilisé pour générer un identifiant de navigateur qui identifie le navigateur ;
une partie d'identification de navigateur pouvant être utilisée pour déterminer si la première demande comprend l'identifiant de navigateur ;
une partie de redirection pouvant être utilisée pour connecter le navigateur au dit deuxième serveur lorsque ladite partie d'identification de navigateur détermine que la première demande comprend un identifiant de navigateur non reconnu ; et
une partie de mémorisation pouvant être utilisée pour mémoriser l'identifiant de navigateur,
dans lequel ledit deuxième serveur peut en outre être utilisé pour créer l'identifiant de navigateur et une instruction comportant l'identifiant de navigateur, l'instruction pouvant être utilisée pour ordonner au dispositif d'utilisateur d'envoyer une deuxième demande, comportant l'identifiant de navigateur, pour une connexion au premier serveur,
dans lequel ladite partie de communication peut en outre être utilisée pour envoyer l'instruction au dispositif d'utilisateur et pour recevoir la deuxième demande,
dans lequel ladite partie d'identification de navigateur peut en outre être utilisée pour déterminer si la deuxième demande comprend l'identifiant de navigateur,
dans lequel ladite partie de redirection peut en outre être utilisée pour connecter le navigateur au dit deuxième serveur lorsque ladite partie d'identification de navigateur détermine que la deuxième demande comprend l'identifiant de navigateur, et
dans lequel ledit deuxième serveur peut en outre être utilisé pour générer une troisième demande pour connecter le navigateur au premier serveur, la troisième demande comprenant l'identifiant de navigateur.

2. Système selon la revendication 1, dans lequel ladite partie de communication, ledit deuxième serveur, ladite partie d'identification de navigateur, ladite partie de redirection et ladite partie de mémorisation forment une partie d'un terminal à très petite ouverture.

3. Système selon la revendication 2, dans lequel ladite partie de communication peut en outre être utilisée pour communiquer de manière bidirectionnelle avec le premier serveur.

4. Système selon la revendication 3, dans lequel ladite partie de communication suit le protocole HTTP.

5. Système selon la revendication 1, dans lequel ladite partie de communication peut en outre être utilisée pour communiquer de manière bidirectionnelle avec le premier serveur.

6. Système selon la revendication 5, dans lequel ladite partie de communication suit le protocole HTTP.

7. Système selon la revendication 1, dans lequel ladite partie de communication suit le protocole HTTP.

8. Procédé d'utilisation d'un dispositif d'utilisateur et d'un premier serveur, le dispositif d'utilisateur comportant un navigateur dans celui-ci, le navigateur pouvant être utilisé pour générer une première demande pour une connexion au premier serveur, ledit procédé comprenant :
la réception, par l'intermédiaire d'une partie de communication, de la première demande ;
la génération, par l'intermédiaire d'un deuxième serveur, d'un identifiant de navigateur qui identifie le navigateur ;
la détermination, par l'intermédiaire d'une partie d'identification de navigateur, si la première demande comprend l'identifiant de navigateur ;
la connexion, par l'intermédiaire d'une partie de redirection, du navigateur au deuxième serveur lorsque la partie d'identification de navigateur détermine que la première demande comprend un identifiant de navigateur non reconnu ;
la mémorisation, par l'intermédiaire d'une partie de mémorisation, de l'identifiant de navigateur ;
la création, par l'intermédiaire du deuxième serveur, de l'identifiant de navigateur et d'une instruction comportant l'identifiant de navigateur, l'instruction pouvant être utilisée pour ordonner au dispositif d'utilisateur d'envoyer une deuxième demande, comportant l'identifiant de navigateur, pour la connexion au premier serveur ;
l'envoi, par l'intermédiaire de la partie de communication, de l'instruction au dispositif d'utilisateur ;
la réception, par l'intermédiaire de la partie de communication, de la deuxième demande ;
la détermination, par l'intermédiaire de la partie d'identification de navigateur, si la deuxième demande comprend l'identifiant de navigateur ;
la connexion, par l'intermédiaire de la partie de redirection, du navigateur au deuxième serveur lorsque la partie d'identification de navigateur détermine que la deuxième demande comprend l'identifiant de navigateur ; et
la génération, par l'intermédiaire du deuxième serveur, d'une troisième demande pour connecter le navigateur au premier serveur, la troisième demande comprenant l'identifiant de navigateur.

9. Procédé selon la revendication 8, comprenant en outre la communication de manière bidirectionnelle, par l'intermédiaire de la partie de communication, avec le premier serveur.

10. Procédé selon la revendication 9, dans lequel ladite réception, par l'intermédiaire d'une partie de communication, de la première demande comprend la réception de la première demande selon le protocole HTTP.

11. Procédé selon la revendication 8, dans lequel ladite réception, par l'intermédiaire d'une partie de communication, de la première demande comprend la réception de la première demande selon le protocole HTTP.

12. Support tangible pouvant être lu par un ordinateur sur lequel des instructions pouvant être lues par un ordinateur sont mémorisées, les instructions pouvant être lues par un ordinateur pouvant être lues par un ordinateur pour être utilisée avec un dispositif d'utilisateur et un premier serveur, le dispositif d'utilisateur comportant un navigateur dans celui-ci, le navigateur pouvant être utilisé pour générer une première demande pour une connexion au premier serveur, les instructions tangibles pouvant être lues par un ordinateur étant capables d'ordonner à l'ordinateur d'effectuer le procédé comprenant :
la réception, par l'intermédiaire d'une partie de communication, de la première demande ;
la génération, par l'intermédiaire d'un deuxième serveur, d'un identifiant de navigateur qui identifie le navigateur ;
la détermination, par l'intermédiaire d'une partie d'identification de navigateur, si la première demande comprend l'identifiant de navigateur ;
la connexion, par l'intermédiaire d'une partie de redirection, du navigateur au deuxième serveur lorsque la partie d'identification de navigateur détermine que la première demande comprend un identifiant de navigateur non reconnu ;
la mémorisation, par l'intermédiaire d'une partie de mémorisation, de l'identifiant de navigateur ;
la création, par l'intermédiaire du deuxième serveur, de l'identifiant de navigateur et d'une instruction comportant l'identifiant de navigateur, l'instruction pouvant être utilisée pour ordonner au dispositif d'utilisateur d'envoyer une deuxième demande, comportant l'identifiant de navigateur, pour une connexion au premier serveur ;
l'envoi, par l'intermédiaire de la partie de communication, de l'instruction au dispositif d'utilisateur ;
la réception, par l'intermédiaire de la partie de communication, de la deuxième demande ;
la détermination, par l'intermédiaire de la partie d'identification de navigateur, si la deuxième demande comprend l'identifiant de navigateur ;
la connexion, par l'intermédiaire de la partie de redirection, du navigateur au deuxième serveur lorsque la partie d'identification de navigateur détermine que la deuxième demande comprend l'identifiant de navigateur ; et
la génération, par l'intermédiaire du deuxième serveur, d'une troisième demande pour connecter le navigateur au premier serveur, la troisième demande comprenant l'identifiant de navigateur.

13. Support tangible pouvant être lu par un ordinateur selon la revendication 12, les instructions pouvant être lues par un ordinateur étant capables d'ordonner à l'ordinateur d'effectuer ledit procédé comprenant en outre la communication bidirectionnelle, par l'intermédiaire de la partie de communication, avec le premier serveur.

14. Support tangible pouvant être lu par un ordinateur selon la revendication 13, les instructions pouvant être lues par un ordinateur étant capables d'ordonner à l'ordinateur d'effectuer ledit procédé dans lequel ladite réception, par l'intermédiaire d'une partie de communication, de la première demande comprend la réception de la première demande selon le protocole HTTP.

15. Support tangible pouvant être lu par un ordinateur selon la revendication 12, les instructions pouvant être lues par un ordinateur étant capables d'ordonner à l'ordinateur d'effectuer ledit procédé dans lequel ladite réception, par l'intermédiaire d'une partie de communication, de la première demande comprend la réception de la première demande selon le protocole HTTP.
